# EUROPÄISCHE PATENTSCHRIFT

(11) **EP 3 076 752 B1**
(45) Veröffentlichungstag und Bekanntmachung des Hinweises auf die Patenterteilung: **18.12.2019**
(21) Anmeldenummer: 16000703.5
(22) Anmeldetag: 24.03.2016
(51) Int. Cl.: H05B 3/34, B62D 1/06

(54) **HEIZELEMENT FÜR BENUTZERBERÜHRBARE FLÄCHEN**
HEATING ELEMENT FOR USER-CONTACT SURFACES
ÉLEMENT DE CHAUFFAGE POUR SURFACES POUVANT ETRE EN CONTACT AVEC L'UTILISATEUR

(30) Priorität: 30.03.2015 DE 202015002364 U
(43) Veröffentlichungstag der Anmeldung: 05.10.2016
(73) Patentinhaber: I.G. Bauerhin GmbH, 63584 Gründau (DE)
(72) Erfinder: Flittner, Klaus, D-63867 Johannesberg (DE); Michelmann, Jochen, D-63571 Gelnhausen (DE)
(74) Vertreter: Grimm, Ekkehard

(56) Entgegenhaltungen:
- DE-A1- 2 915 797
- GB-A- 2 148 677
- GB-A- 2 148 679
- JP-A- S6 074 374
- US-A- 3 683 151
- US-B1- 7 038 170

## Beschreibung

Die vorliegende Erfindung betrifft ein Heizelement für benutzerberührbare Flächen in einem Fahrzeuginnenraum, wobei das Heizelement mindestens ein Trägermaterial aufweist, auf dem mindestens ein Heizleiter, der insbesondere wellen- oder mäanderförmig verläuft, und mindestens ein Temperaturerfassungselement befestigt sind, gemäß dem Oberbegriff des Anspruchs 1.

Heizelemente für die Beheizung von Flächen in Fahrzeugen, mit denen ein Benutzer in Berührung kommt, wie beispielsweise Sitzflächen, zählen heute zu einer standardmäßigen Ausstattung. Neben Sitzflächen werden aber auch zunehmend Lenkräder mit Heizelementen ausgestattet.

Die Temperatur solcher beheizten Flächen kann üblicherweise durch den Benutzer eingestellt werden. Um die jeweilige Ist-Temperatur zu erfassen, ist ein Temperatursensor vorgesehen, der Teil eines Regelkreises ist. Als Temperatursensor wird dabei beispielsweise ein NTC-Sensor eingesetzt, der die Form ähnlich eines Lötpunktes oder einer Lötpille mit Anschlussdrähten aufweist. Ein solcher NTC-Sensor erfasst die Temperatur des Heizelements folglich nur punktuell und kann sich aufgrund seiner Form auf der Oberfläche der beheizten Fläche abzeichnen.

Die GB 2 148 677 A beschreibt einen temperatur-sensitiven, elektrischen Sensor, der dafür verwendet wird, eine Heizvorrichtung (z. B. elektrische Heizdecke) gegen eine Überhitzung zu schützen. In den Figuren sind verschiedene Ausführungsformen des temperaturempfindlichen, elektrischen Sensors dargestellt. Auch ist in den Figuren eine Heizdecke gezeigt, in der der Temperatursensor eingearbeitet ist. Es ist ersichtlich, dass der Leiter des Temperatursensors helixförmig um einen Kern herum verläuft. Es ist auch zu sehen, dass der temperaturempfindliche, elektrische Sensor einen zentralen Kern, einen dreiteiligen temperaturempfindlichen Leiterbereich und einen elektrisch isolierenden Mantel aufweist. Der zentrale Kern ist ein flexibles, elektrisch nicht leitfähiges Material und ist zentral und axial innerhalb des Sensors angeordnet. Der Leiterbereich mit dem dreiteiligen Aufbau besitzt ein Paar von beabstandeten elektrischen Leitern, die durch ein temperaturempfindliches Impedanz-Material, das sandwichartig dazwischengefügt ist, getrennt sind. Eine andere Ausführungsform zeigt einen koaxial aufgebauten, temperaturempfindlichen Sensor. In der Beschreibung ist auch erwähnt, dass in der Heizdecke ein NTC-Sensor verwendet wird. In den Figuren ist zu erkennen, dass der Heizdraht der elektrischen Heizeinrichtung und der Draht des Sensors nicht parallel verlaufen.

Die D2 US 7 038 170 B1 beschreibt eine Heizdecke. Unter anderem ist angegeben, dass Heizleiter und Heizelement aus dem gleichen Material sein sollen, wobei der Metalldraht aus Kupfer, Kupferlegierungen und anderen Eisen- und Nichteisenmetallen, einschließlich Nickel, Stahl, hergestellt werden kann. Ein solches Heiz- oder Sensorelement ist in den Figuren dargestellt. Mit diesem Aufbau für das Heiz- oder Sensorelement verlaufen diese, eingesetzt in eine Heizdecke, nicht parallel zueinander.

Die DE 29 15 797 A1 beschreibt ein Temperatursteuersystem für elektrische Heizkissen, elektrische Bettdecken, Fußbodenheizungen, elektrische Teppiche und dergleichen.

Die GB 2 148 679 A beschreibt eine elektrische Heizvorrichtung, zum Beispiel für Heizdecken, die gegen Überhitzung geschützt ist. Wie die Figuren zeigen, ist der Heizdraht gewendelt, so dass der Heizdraht folglich nicht parallel zu dem wärmeempfindlichen Leiter bzw. dessen zentralem Kern verläuft.

Die US 3 683 151 A beschreibt eine elektrisch beheizte Bettdecke mit einer thermostatlosen Überhitzungsschutzschaltung.

Die DE 100 48 181 A1 beschreibt einen Heizgriff mit einem Heizelement, der für Motorräder verwendet wird. Der Heizgriff umfasst ein Griffrohr, auf dessen äußerem Umfang ein Heizdraht spiralförmig aufgewickelt ist. Der Heizdraht besteht aus einem Material mit einem relativ hohen Temperaturkoeffizienten, beispielsweise aus Reinstnickel. Zur Regelung der Temperatur des Heizgriffs wird ein Vergleich der Ist-Temperatur mit einer Soll-Temperatur vorgenommen, wozu der Heizvorgang des Heizelements in bestimmten Abständen unterbrochen wird, um die Temperatur des Heizgriffs über den Spannungsabfall bei dem Messstrom an dem Heizelement zu bestimmen. Der Spannungswert wird mit einem Referenzwert verglichen, der der Soll-Temperatur entspricht. Liegt der Messwert unterhalb des Referenzwerts, wird ein neuer Heizvorgang gestartet.

Die DE-OS 2 208 485 beschreibt ein Verfahren und eine Einrichtung zur elektrischen Beheizung von Werkstücken oder Formen mit einem Heizwiderstand, der gleichzeitig als Messfühler für eine die Beheizung beeinflussende Steuer- oder Regeleinrichtung verwendet wird. Hierzu wird der Heizwiderstand abwechselnd mit einer Heizstromquelle und mit einem Messkreis der Steuer- oder Regeleinrichtung verbunden.

Die DE 100 55 141 A1 betrifft einen Heizleiter, insbesondere für Heizelemente eines Kraftfahrzeugsitzes. Damit der eingesetzte Heizleiter gegenüber den in Sitzen auftretenden Korrosionserscheinungen resistent ist und eine hohe mechanische Flexibilität aufweist, wird von den in einem Strang zusammengefassten, sich berührenden Einzelleitern aus einem leitfähigen Material des Heizleiters mindestens ein Einzelleiter durch eine Isolation von allen anderen Einzelleitern elektrisch getrennt. Darüber hinaus kann mindestens ein Einzelleiter aus einem Material bestehen, das seinen elektrischen Widerstand in Abhängigkeit der Eigentemperatur ändert, wobei ein solcher Einzelleiter als Temperatursensor fungieren kann. Als Material für diesen Einzelleiter werden Nickel, Eisen oder Legierungen eingesetzt, die einen hohen Temperaturkoeffizienten aufweisen und so ein großes Ausgangssignal in Form einer Widerstandsveränderung erzeugen.

Der vorliegenden Erfindung liegt nun die Aufgabe zugrunde, ein Heizelement zu schaffen, das aufgrund der eingesetzten Temperaturerfassung reproduzierbare Temperaturmessungen, die der Temperatur auf der Oberfläche der beheizten Fläche entsprechen, für den Regelkreis, in den der Heizleiter eingebunden ist, liefert, und bei dem das Temperaturerfassungselement keine sich auf der Oberfläche abzeichnende Abmessungen, wie dies bei NTC-Temperaturfühlern der Fall ist, aufweist.

Gelöst wird diese Aufgabe durch ein Heizelement mit den Merkmalen des Anspruchs 1. Bevorzugte Ausführungsformen dieses Heizelements sind in den abhängigen Ansprüchen angegeben.

Das mindestens eine Temperaturerfassungselement ist als mindestens ein von dem Heizleiter getrennter Temperaturerfassungsleiter ausgeführt, der in Abhängigkeit seiner Temperatur seinen elektrischen Widerstand ändert. Darüber hinaus verläuft der mindestens eine Temperaturerfassungsleiter im Wesentlichen parallel zu dem Heizleiter und von diesem beabstandet und folgt dem Verlauf des Heizleiters zumindest teilweise, das bedeutet insbesondere, dass der Heizleiter zumindest über einen Teilabschnitt der Länge des Heizleiters parallel zu diesem verläuft, unabhängig davon, ob der Heizleiter geradlinig, wellen- oder mäanderförmig oder in sonstiger Weise positioniert ist. Ein solcher Temperaturerfassungsleiter wird als dünner Draht ausgeführt, der vorzugsweise einen Durchmesser aufweist, der geringer ist als der Durchmesser des Heizleiters, so dass er sich nicht durch ein Oberflächenmaterial, beispielsweise ein Bezugsmaterial, abzeichnet.

Mit dem Heizelement wird die Temperatur über eine größere Fläche erfasst, so dass der Effekt von sogenannten Hotspots vermieden wird. Weiterhin wird die Temperatur des Heizelements und damit idealerweise der Oberfläche der beheizten Fläche erfasst.

Vorzugsweise ist vorgesehen, dass die Länge der Temperaturerfassungsleiter, mit der er im Wesentlichen parallel zu dem Heizleiter beabstandet verläuft, mindestens 1/10 der Länge des Heizleiters beträgt. Diese Länge des Temperaturerfassungsleiters kann auch in mehrere Abschnitte unterteilt werden; auch kann der Temperaturerfassungsleiter in einer Schleife zwischen dem Heizleiter verlaufen, indem er von einem Anschlussende ausgeht und mit seinem anderen Ende wieder zu diesem Anschlussende zurückgeführt wird. In jedem Fall ist sichergestellt, dass der Temperaturerfassungsleiter die Temperatur des Heizelements über einen großen Flächenbereich erfasst.

Der Temperaturerfassungsleiter wird aus Metall oder einer Metalllegierung hergestellt. Darüber hinaus weist der Temperaturerfassungsleiter einen höheren Temperaturkoeffizienten als der Temperaturkoeffizient des Heizleiters auf. Der Temperaturerfassungsleiter besteht aus Nickel- oder einem Reinstnickelmaterial. Nicht Teil der Erfindung ist ein Ausführungsbeispiel wobei der Temperaturerfassungsleiter aus Kohlenstoff (Karbon) oder aus Kohlenstoff enthaltendem, elektrisch leitendem Kunststoff oder einem Kunststoff, der Metallpartikel aufweist, besteht.

Besonders bevorzugt ist ein monofiler Temperaturerfassungsleiter, d. h. ein Erfassungsleiter mit nur einer Litze, so dass im Fehlerfall aufgrund eines Leiterbruchs eine korrekte Erfassung möglich ist und keine falsche, sondern realistische Temperatur gemessen wird. Ein solcher Temperaturerfassungsleiter kann einen Durchmesser bzw. eine Litzendicke von jeweils 40 µm bis 200 µm, bevorzugt von 50 µm bis 150 µm, besonders bevorzugt zwischen 70 µm und 110 µm, haben. Der Durchmesser des Temperaturerfassungsleiters, insbesondere dann, wenn er als monofiler Temperaturerfassungsleiter ausgeführt wird, kann geringer als beispielsweise die Faserstruktur oder die Webstruktur eines Trägermaterials, auf dem der Heizleiter und der Temperaturerfassungsleiter aufgebracht sind, oder eine Faserstruktur, in die der Heizleiter und der Temperaturerfassungsleiter eingebettet sind, sein.

Es ist aber auch für einige Anwendungsfälle des Heizelements vorgesehen, den Temperaturerfassungsleiter mehrlitzig, vorzugsweise 2- bis 6-litzig, auszubilden, so dass der Temperaturerfassungsleiter an Festigkeit gewinnt, wenn davon auszugehen ist, dass der Temperaturerfassungsleiter hohen Beanspruchungen unterworfen wird. Die Anzahl der Litzen ergibt sich dabei aus dem Grundwiderstand des Temperaturerfassungsleiters, dessen Temperaturkoeffizienten und dem zu erwartenden Temperaturbereich. Die Widerstandsänderung beim Bruch einer einzelnen Litze muss dabei zu einer gemessenen Temperatur führen, die außerhalb des zu erwartenden Temperaturbereichs liegt. Allerdings wird bei einem Einsatz des Heizelements in einem Lenkrad zur Lenkradbeheizung oder als Beheizung einer Verkleidungsfläche in einem Fahrzeuginnenraum ein 1-litziger, gegebenenfalls auch ein 2-litziger, Temperaturerfassungsleiter bevorzugt.

Durch das erfindungsgemäße Heizelement wird eine bessere Regelung der Oberflächentemperatur der beheizten Fläche erreicht. Die Temperatur des Heizelements wird über eine größere Fläche gemittelt, während sich das Heizelement im Betrieb befindet, so dass die Oberflächentemperatur feinfühliger und damit besser geregelt werden kann. Da über den Temperaturerfassungsleiter die Temperatur nicht lokal an einer einzigen Stelle gemessen wird, wird auch bei Heizelementen mit einer geringen Flächenausdehnung der Einfluss der hohen Temperatur des Heizelements im Anschlussbereich verringert.

Wenn es nicht anders angegeben ist, sollen die Abmessungen und Geometrien der verschiedenen hier gezeigten Strukturen die Erfindung nicht einschränken, sondern es sind auch andere Abmessungen oder Geometrien möglich.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: ein Heizelement gemäß der Erfindung, das für die Beheizung eines Lenkrads vorgesehen ist, in seiner Abwicklung,
- Figur 2: ein Lenkrad in einer schematischen Darstellung, bei dem das Heizelement der Figur 1 eingesetzt wird,
- Figur 3: einen Schnitt durch ein Heizelement, bei dem die Heizleiter und die Leiter des Temperaturerfassungselements auf einem Trägermaterial mit einem Hilfsfaden befestigt sind, und
- Figur 4: einen Schnitt entsprechend der Figur 3, bei dem die Heizleiter und die Leiter des Temperaturerfassungselements auf einem Trägermaterial mittels Klebeschicht befestigt sind,
- Figur 5: einen Ausschnitt eines Heizelements in einer weiteren Ausführungsform gemäß der Erfindung, und
- Figur 6: einen Ausschnitt eines weiteren Heizelements gemäß der Erfindung.

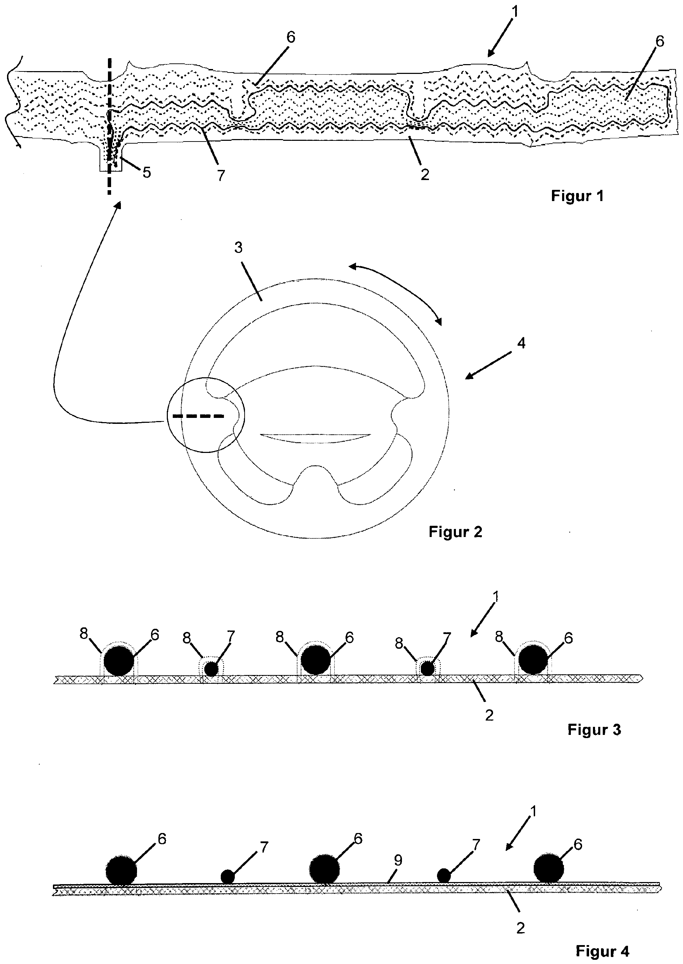

Das Heizelement, wie es in Figur 1 dargestellt und mit dem Bezugszeichen 1 bezeichnet ist, findet seinen Einsatzbereich bei Flächen, mit denen ein Benutzer in Berührung gelangt, insbesondere Flächen im Kraftfahrzeugbereich. Hierunter fallen Verkleidungsteile, die Griffflächen eines Lenkrads, eines Schaltknaufs, Türverkleidungen, Armlehnen, aber auch Flächen eines Sitzes. Der bevorzugte Einsatzbereich sind jedoch zu beheizende Flächen, die nicht gepolstert sind, und solche, bei denen ein Trägermaterial unmittelbar mit einem Bezug bezogen ist und bei dem sich das Temperaturerfassungselement nicht durch den Bezug abzeichnen soll.

Wie die Figuren 1 und 3 bis 6 zeigen, umfasst das Heizelement 1 ein Trägermaterial 2, beispielsweise ein Gewirke oder Gewebe, insbesondere aber ein Vlies oder eine Folie, die eine dünne Unterlage bilden. Das Heizelement 1, wie es in Figur 1 dargestellt ist, ist insbesondere für die Beheizung der Oberfläche eines Lenkradkranzes 3 eines Lenkrads 4, das schematisch in Figur 2 dargestellt ist, vorgesehen und weist entsprechend eine Länge auf, die dem Außenumfang des Lenkradkranzes 3 entspricht. Zur eindeutigen Zuordnung des Heizelements 1 der Figur 1 zu dem Lenkrad der Figur 2 ist in beiden Figuren eine strichpunktierte Bezugslinie eingezeichnet.

Auf diesem Trägermaterial 2 sind, ausgehend von einem Anschlussbereich 5, mehrere Heizleiter 6 über dessen Fläche in einem mäanderförmigen oder wellenförmigen Verlauf derart verteilt, dass die beiden Enden jedes Heizleiters 6 an dem Anschlussbereich 5 enden. Zwischen diesen Heizleitern 6 verläuft ein Temperaturerfassungsleiter 7, der ein Temperaturerfassungselement bildet. Der Verlauf dieses Temperaturerfassungsleiters 7 ist so festgelegt, dass der Temperaturerfassungsleiter 7 von den Heizleitern 6 getrennt ist und sich an keiner Stelle mit einem Heizleiter 6 kreuzt. Darüber hinaus verläuft der Temperaturerfassungsleiter 7 zumindest zu dem einen Heizleiter 6, der in Figur 1 durch eine unterbrochene Linie dargestellt ist (im Gegensatz zu den Heizleitern 6 in punktierter Linie), im Wesentlichen parallel beabstandet.

Auch die beiden Enden des in einer Schleife verlaufenden Temperaturerfassungsleiters 7 enden an dem Anschlussbereich 5, von dem auch die Enden der Heizleiter 6 ausgehen und dort wieder ankommen, so dass die Enden sowohl der Heizleiter 6 als auch des Temperaturerfassungsleiters 7 an dem Anschlussbereich 5 angeschlossen werden können.

Wie in den Querschnitten der Figuren 3 und 4 angedeutet ist, ist der Temperaturerfassungsleiter 7 mit einem sehr geringen Durchmesser als eine Litze oder als ein mehrlitziger Leiter ausgeführt derart, dass der Durchmesser des Temperaturerfassungsleiters 7 geringer ist als der Durchmesser der Heizleiter 6. Dadurch ist sichergestellt, dass sich der Temperaturerfassungsleiter nicht durch einen Bezug, der das Heizelement 1 abdeckt, abzeichnet, da in jedem Fall der Aufbau des Heizelements 1 so gewählt wird, dass sich die Heizleiter 6 nicht durch einen Bezug und sich dann mit Sicherheit auch nicht der Temperaturerfassungsleiter 7 durch den Bezug abzeichnen.

Die Heizleiter 6 und/oder der Temperaturerfassungsleiter 7 können mit einem Faden 8 an dem Trägermaterial 2 befestigt, beispielsweise vernäht, werden. Als Alternative dazu ist auch vorgesehen, die Heizleiter 6 und/oder die Temperaturerfassungsleiter 7 über eine Klebeschicht 9 mit dem Trägermaterial 2 zu verbinden. Für die Klebeschicht 9 kann ein geeigneter Kleber, bevorzugt ein Schmelzkleber oder ein Kaschierkleber, verwendet werden. Auch ist es von Vorteil, die Klebeschicht 9 nur punktuell auf dem Trägermaterial 2 aufzubringen, beispielsweise durch ein Punktmuster oder Punktraster eines Klebematerials. Eine weitere Möglichkeit besteht darin, die Heizleiter 6 und den Temperaturerfassungsleiter 7 zwischen zwei Trägermaterialien 2, die über eine Klebeschicht miteinander verbunden sind, zu befestigen.

Ein wesentliches Merkmal des Heizelements 1 ist darin zu sehen, dass der Temperaturerfassungsleiter 7 über mindestens 1/10 der Länge eines der Heizleiter 6 im Wesentlichen parallel dazu verläuft, das bedeutet, der Temperaturerfassungsleiter 7 folgt dem mäander- oder wellenförmigen Verlauf des entsprechenden Heizleiters 6 in einem definierten Abstand.

Der Temperaturerfassungsleiter 7, der das Temperaturerfassungselement bildet, ist Teil eines Regelkreises, um die Temperatur des Heizelements 1 zu regeln, indem über das Temperaturerfassungselement der Ist-Wert der Temperatur der durch die Heizleiter 6 erwärmten Fläche ermittelt wird und daraus unter Vergleich mit einem Soll-Wert die Heizleistung der Heizleiter 6 eingestellt wird. Da sich der Temperaturerfassungsleiter 7 über einen großen Flächenbereich erstreckt, wird die Temperatur über den entsprechend großen Flächenbereich gemittelt. Folglich wird die Temperatur über den Temperaturerfassungsleiter 7 nicht lokal aus einer einzelnen Stelle abgeleitet, sondern über einen großen Bereich erfasst. Die Temperaturerfassung basiert darauf, dass sich durch eine Erhöhung der Temperatur, hervorgerufen durch die Heizleiter 6, der Widerstand des Temperaturerfassungsleiters 7 ändert.

Erfindungsgemäß wird für das Temperaturerfassungselement ein Temperaturerfassungsleiter 7 mit einem hohen Temperaturkoeffizienten eingesetzt, vorzugsweise ein Nickeldraht. Nicht Teil der beanspruchten Erfindung sind ein Leiter aus Kohlenstoff (Karbon) oder aus Kohlenstoff enthaltendem (Karbon enthaltendem) Kunststoff. Die Widerstandsänderung des Temperaturerfassungsleiters 7 wird zur Bestimmung der Temperatur der Heizung und zur Regelung der Oberflächentemperatur eingesetzt.

Die Dicke eines Filaments des Temperaturerfassungsleiters 7 beträgt 40 µm bis 200 µm. Eine Dicke bzw. ein Durchmesser von 50 µm bis 150 µm ist ebenso vorgesehen wie ein Durchmesser von 70 µm und 110 µm. Der Heizleiter wird ebenso wie der Temperaturerfassungsleiter 7 mittels Faden 8 entsprechend Figur 3 oder in Klebetechnik entsprechend der Figur 4 an dem Trägermaterial 2 befestigt. Der Temperaturerfassungsleiter 7 sollte einen Widerstandswert von 7 Ohm/m bis 15 Ohm/m aufweisen. Vorzugsweise sollte dabei der hohe Widerstandswert gewählt werden, da bei größerer Spannung die in dem Temperaturerfassungsleiter 7 fließenden Ströme relativ klein gehalten werden können und dadurch die Eigenerwärmung des Temperaturerfassungsleiters 7 verringert wird.

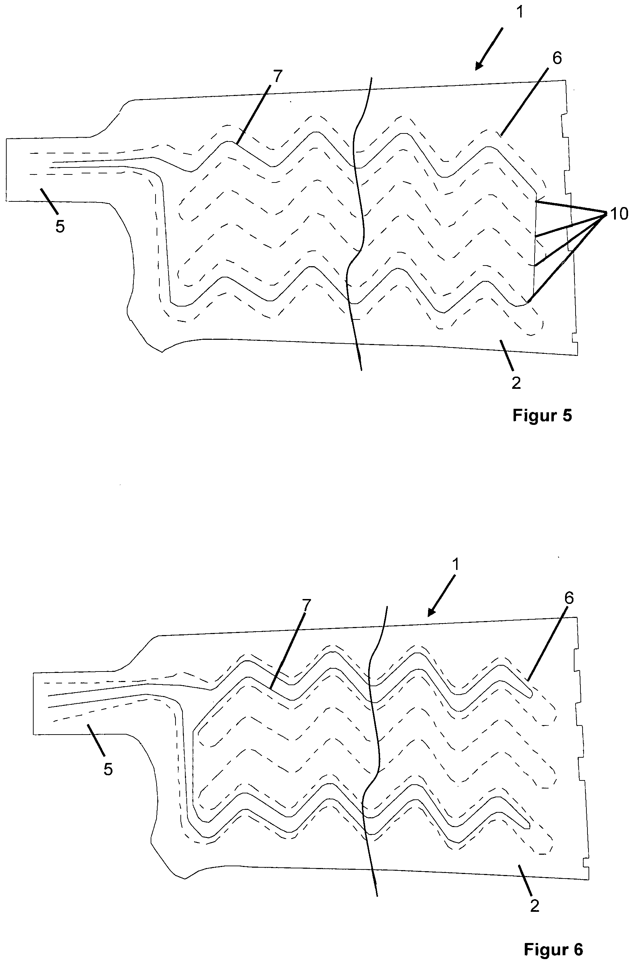

Bevorzugt wird der Abstand zwischen Temperaturerfassungsleiter 7 und Heizleiter 6 so gewählt, dass im Fall von mehreren Heizleitern beziehungsweise Heizleiterkreisen der Temperaturerfassungsleiter 7 mittig zwischen zwei Heizleitern verläuft, wobei keine Kreuzung zwischen Heizleiter 6 und Temperaturerfassungsleiter 7 erfolgt. Für den Fall, dass aus Platzgründen eine kreuzungsstellenfreie Verlegung nicht realisierbar ist, zeigt Figur 5 eine mögliche Ausgestaltungsform des erfindungsgemäßen Heizelements 1 mit nur einem einen einzelnen Heizkreis bildenden Heizleiter 6. In dieser Ausgestaltungsform verläuft der Temperaturerfassungsleiter 7 zwischen dem hin- und rückläufigen Teil in etwa mittig der wellen- oder mäanderförmigen Struktur des Heizleiters 6, so dass die Anzahl der Kreuzungsstellen 10 minimiert ist.

Aus Figur 6 ist eine weitere mögliche Ausgestaltungsform des erfindungsgemäßen Heizelements 1 ersichtlich, bei dem der Abstand zwischen Temperaturerfassungsleiter 7 und Heizleiter 6 so gewählt ist, dass der Temperaturerfassungsleiter 7 zwischen dem im Wesentlichen parallel beabstandeten Heizleiter 6, des beispielsweise einen Heizkreises, eine Hin- und Rückführung bildet, so dass sich der Heizleiter 6 und der Temperaturerfassungsleiter 7 nicht kreuzen und sich somit keine Kreuzungsstelle 10, wie dies in der Ausführungsform der Figur 5 der Fall ist, ergibt.

## Patentansprüche

1. Heizelement (1) für benutzerberührbare Flächen in einem Fahrzeuginnenraum, wobei das Heizelement (1) mindestens ein Trägermaterial (2) aufweist, auf dem mindestens ein Heizleiter (6) und mindestens ein Temperaturerfassungselement angeordnet sind, wobei das mindestens eine Temperaturerfassungselement als mindestens ein von dem Heizleiter getrennter Temperaturerfassungsleiter (7) ausgeführt ist, der in Abhängigkeit seiner Temperatur seinen elektrischen Widerstand ändert, wobei der Temperaturerfassungsleiter (7) im Wesentlichen parallel beabstandet dem Verlauf des Heizleiters (6) zumindest teilweise folgt, und wobei der Temperaturerfassungsleiter (7) aus Metall oder einer Metalllegierung besteht, **dadurch gekennzeichnet, dass** der Temperaturerfassungsleiter (7) einen höheren Temperaturkoeffizienten als der Temperaturkoeffizient des Heizleiters (6) aufweist und dass der Temperaturerfassungsleiter (7) aus Nickel- oder einem Reinstnickelmaterial besteht.

2. Heizelement nach Anspruch 1, **dadurch gekennzeichnet, dass** die Länge des Temperaturerfassungsleiters (7) über mindestens 1/10 der Länge des Heizleiters (6) im Wesentlichen parallel zu diesem beabstandet verläuft.

3. Heizelement nach einem der vorstehenden Ansprüche, **dadurch gekennzeichnet, dass** der Temperaturerfassungsleiter (7) monofil ausgebildet ist.

4. Heizelement nach einem der vorherstehenden Ansprüche, **dadurch gekennzeichnet, dass** der Temperaturerfassungsleiter (7) mehrlitzig ausgebildet ist.

5. Heizelement nach Anspruch 4, **dadurch gekennzeichnet, dass** der Temperaturerfassungsleiter (7) 2- bis 6-litzig ausgebildet ist.

6. Heizelement nach einem der Ansprüche 3 bis 5, **dadurch gekennzeichnet, dass** die Dicke der Litze(n) des Temperaturerfassungsleiters (7) jeweils 40 µm bis 200 µm, bevorzugt 50 µm bis 150 µm, besonders bevorzugt zwischen 70 µm und 110 µm, beträgt.

## Claims

1. Heating element (1) for user-contact surfaces in a vehicle interior, the heating element (1) comprising at least one carrier material (2) on which at least one heating conductor (6) and at least one temperature sensing element are arranged, the at least one temperature sensing element being designed as at least one temperature sensing conductor (7) which is separated from the heating conductor and which changes its electrical resistance as a function of its temperature, the temperature sensing conductor (7) following the course of the heating conductor (6) at least partially at substantially parallel spacings, and the temperature sensing conductor (7) consisting of metal or a metal alloy, **characterized in that** the temperature sensing conductor (7) has a higher temperature coefficient than the temperature coefficient of the heating conductor (6) and that the temperature sensing conductor (7) consists of nickel or a high-purity nickel material.

2. Heating element according to claim 1, **characterized in that** the length of the temperature sensing conductor (7) extends over at least 1/10 of the length of the heating conductor (6) at a distance substantially parallel to the latter.

3. Heating element according to one of the preceding claims, **characterized in that** the temperature sensing conductor (7) is of monofilament design.

4. Heating element according to one of the preceding claims, **characterized in that** the temperature sensing conductor (7) is of multistrand design.

5. Heating element according to claim 4, **characterized in that** the temperature sensing conductor (7) is designed with 2 to 6 strands.

6. Heating element according to one of claims 3 to 5, **characterized in that** the thickness of the strand(s) of the temperature sensing conductor (7) is in each case 40 µm to 200 µm, preferably 50 µm to 150 µm, particularly preferably between 70 µm and 110 µm.

## Revendications

1. Elément chauffant (1) pour des surfaces pouvant être touchées par un utilisateur dans un habitacle de véhicule, dans lequel l'élément chauffant (1) présente au moins un matériau de support (2), sur lequel sont disposés au moins un conducteur chauffant (6) et au moins un élément de détection de température, dans lequel le au moins un élément de détection de température est réalisé sous la forme d'au moins un conducteur de détection de température (7), séparé du conducteur chauffant, qui modifie sa résistance électrique en fonction de sa température, dans lequel le conducteur de détection de température (7) suit au moins en partie le tracé du conducteur chauffant (6) de manière sensiblement parallèlement distante, et dans lequel le conducteur de détection de température (7) est constitué de métal ou d'un alliage de métal, **caractérisé en ce que** le conducteur de détection de température (7) présente un coefficient de température plus élevé que le coefficient de température du conducteur chauffant (6) et que le conducteur de détection de température (7) est constitué de nickel ou d'un matériau en nickel ultra-pur.

2. Elément chauffant selon la revendication 1, **caractérisé en ce que** la longueur du conducteur de détection de température (7) s'étend sur au moins 1/10 de la longueur du conducteur chauffant (6) sensiblement parallèlement à distance de celui-ci.

3. Elément chauffant selon l'une quelconque des revendications précédentes, **caractérisé en ce que** le conducteur de détection de température (7) est monofil.

4. Elément chauffant selon l'une quelconque des revendications précédentes, **caractérisé en ce que** le conducteur de détection de température (7) est multitoron.

5. Elément chauffant selon la revendication 4, **caractérisé en ce que** le conducteur de détection de température (7) est réalisé avec 2 à 6 torons.

6. Elément chauffant selon l'une quelconque des revendications 3 à 5, **caractérisé en ce que** l'épaisseur du(des) toron(s) du conducteur de détection de température (7) atteint respectivement 40 µm à 200 µm, de préférence 50 µm à 150 µm, de manière particulièrement préférée est comprise entre 70 µm et 110 µm.
